# EUROPÄISCHE PATENTSCHRIFT

(11) **EP 0 618 243 B1**
(45) Veröffentlichungstag und Bekanntmachung des Hinweises auf die Patenterteilung: **23.04.1997**
(21) Anmeldenummer: 94104400.0
(22) Anmeldetag: 21.03.1994
(51) Int. Cl.: C08G 18/28, C08G 18/32, C08G 18/38, C08G 18/48

(54) **Verdickungsmittel-Zubereitung auf Polyurethanbasis und ihre Verwendung zur Verdickung wässriger Systeme**
Polyurethane based binder preparation and its use to bind aqueous systems
Préparation d'un liant à partir de polyuréthane et son utilisation comme liant pour des systèmes aqueux

(30) Priorität: 01.04.1993 DE 4310702
(43) Veröffentlichungstag der Anmeldung: 05.10.1994
(73) Patentinhaber: BAYER AG, 51368 Leverkusen (DE); Borchers GmbH, 29699 Bomlitz (DE)
(72) Erfinder: Thies, Uwe, D-38690 Goslar (DE); Griesbach, Michael, D-38690 Vienenburg (DE); Dr.Schwindt, Jürgen, D-51373 Leverkusen (DE); Dr Mazanek, Jan, D-51061 Koln (DE)

(56) Entgegenhaltungen:
- EP-A- 0 310 345
- EP-A- 0 332 013
- US-A- 4 079 028
- US-A- 4 628 092
- DATABASE WPI Week 9425, Derwent Publications Ltd., London, GB; AN 206729 'AQUEOUS LUBRICATIVE COATING COMPOSITION' & JP-A-06 145 559 (NIHON PARKERIZING/NIPPON STEEL) 24. Mai 1994
- DATABASE WPI Week 9327, Derwent Publications Ltd., London, GB; AN 217053 'AQUEOUS ETCHING RESISTANT COATING COMPOSITION' & JP-A-05 140 491 (TOYO INK) 8. Juni 1993
- DATABASE WPI Week 9425, Derwent Publications Ltd., London, GB; AN 206729 'AQUEOUS LUBRICATIVE COATING COMPOSITION' & JP-A-06 145 559
- DATABASE WPI Week 9327, Derwent Publications Ltd., London, GB; AN 217053 'AQUEOUS ETCHING RESISTANT COATING COMPOSITION' & JP-A-05 140 491

## Beschreibung

Die Erfindung betrifft eine neue Verdickungsmittel-Zubereitung zur Verdickung wäßriger Systeme, die sich durch eine besonders niedrige Eigenviskosität bei gleichzeitig hoher Verdickungswirkung auszeichnet, sowie ihre Verwendung.

Verdickungsmittel auf Polyurethanbasis für wäßrige Systeme werden in zahlreichen Veröffentlichungen beschrieben (vgl. z.B. DE-OS 1 444 243, DE-OS 3 630 319, EP-A-0 031 777, EP-A-0 307 775, EP-A-0 495 373, US-PS 4 079 028, US-PS 4 155 892, US-PS 4 499 233 oder US-PS 5 023 309).

Diesen Verdickungsmitteln des Standes der Technik gemeinsam ist das gleichzeitige Vorliegen von (i) hydrophilen Segmenten in einer Menge von mindestens 50 Gew.-%, (ii) hydrophoben Segmenten in einer Menge von maximal 10 Gew.-% und (iii) Urethangruppen. Unter "hydrophilen Segmenten" sind hierbei insbesondere Polyetherketten mit mindestens 5 Kettengliedern zu verstehen, deren Alkylenoxid-Einheiten zumindest zu 60 Mol-% aus Ethylenoxideinheiten bestehen. Unter "hydrophoben Segmenten" sind hierbei insbesondere Kohlenwasserstoff-Segmente mit mindestens 6 Kohlenstoffatomen zu verstehen.

Die nachstehend genannte Komponente a) der erfindungsgemäßen Zubereitungen entspricht vorzugsweise dieser Definition.

Diese Polyurethanverdicker eignen sich als Hilfsmittel für die Einstellung von rheologischen Eigenschaften von wäßrigen Systemen wie Auto- und Industrielacken, Putz- und Anstrichfarben, Druck- und Textilfarben, Pigmentdruckpasten, pharmazeutischen, kosmetischen Zubereitungen, Pflanzenschutzformulierungen, Füllstoffdispersionen usw..

Obwohl die bekannten Polyurethanverdicker eine breite Anwendung finden, weisen sie einen wesentlichen Nachteil auf: Sie besitzen in Form ihrer wäßrigen Lösung eine zu hohe Eigenviskosität, die ihre Einarbeitung in die wäßrigen Systeme sehr erschwert.

In der Vergangenheit wurden viele Versuche unternommen, die Eigenviskosität der Verdickungsmittel herabzusetzen. Bereits bei der Herstellung der Verdicker wurde versucht, z.B. durch Erniedrigung des Molekulargewichts die Eigenviskosität zu erniedrigen. Dies hat aber innerhalb einer homologen Reihe eine Verschlechterung der Verdickerwirkung zur Folge.

Eine andere Möglichkeit, die Viskosität von wäßrigen Lösungen von Polyurethanverdickern herabzusetzen besteht darin, sie mit Emulgatoren wie alkoxylierten Alkoholen oder Phenolen zu versetzen. Diese Methode hat jedoch den Nachteil, daß diese Hilfsmittel in hohen Konzentrationen verwendet werden müssen, um eine ausreichende Herabsetzung der Eigenviskosität des Verdickers zu erreichen. Aber auch mit dieser Maßnahme läßt sich die Eigenviskosität der Verdicker nicht immer - und insbesondere nicht bei hochwirksamen Verdickungsmitteln - auf das gewünschte Niveau erniedrigen.

Eine gängige Methode, die Eigenviskosität der wäßrigen Polyurethanverdickerlösungen herabzusetzen, ist der Zusatz von wassermischbaren Lösungsmitteln wie z.B. wasserlöslichen ein- oder mehrwertigen Alkoholen. Der wesentliche Nachteil dieser an sich sehr wirksamen Methode liegt in der Verschlechterung der Umweltverträglichkeit der wäßrigen Zubereitungen. Dazu kommt, daß die Menge an Lösemitteln, die zum Erreichen einer gewünschten Viskosität zugesetzt werden müssen, oft relativ hoch ist. Größere Anteile an Lösemitteln können auch zu einer Verschlechterung der anwendungstechnischen Eigenschaften der wäßrigen Zubereitungen führen, wie z.B. der Streicheigenschaften oder der Stabilität.

Der naheliegende Gedanke, die Viskosität der wäßrigen Lösungen durch Verdünnen mit Wasser herabzusetzen, ist selbstverständlich mit einer nachteilhaften Abnahme der Konzentration des Wirkstoffs und damit bei gleicher Gesamtdosierung der verdickenden Wirkung verbunden.

Die der Erfindung zugrundeliegende Aufgabe bestand daher darin, neue Verdickungsmittel-Zubereitungen auf Polyurethanbasis für wäßrige Systeme zur Verfügung zu stellen, die in Form ihrer wäßrigen Lösungen oder Dispersionen im Vergleich zu analogen Systemen des Standes der Technik bei zumindest gleich guter Verdickerwirkung eine deutlich erniedrigte Eigenviskosität aufweisen.

Diese Aufgabe konnte überraschend dadurch gelöst werden, daß den Verdickungsmitteln auf Polyurethanbasis (= Polyurethanverdicker) neben den größtenteils an sich bereits bekannten Emulgatoren als weitere Zusatzmittel bestimmte dreifach ungesättigte Alkohole der nachstehend als Komponente c1) näher beschriebenen Art zugesetzt werden. Hierbei wurde beobachtet, daß die gleichzeitige Zugabe der nachstehend näher beschriebenen Komponenten b) und c1) auf einen Synergismus bezüglich der viskositäütserniedrigenden Wirkung hinausläuft, da bei gleicher Konzentration der Emulgatoren b) in Anwesenheit der erfindungswesentlichen Hilfsmittel c1) eine wesentliche Reduzierung der Eigenviskosität der wäßrigen Lösungen bzw. Dispersionen resultiert, bzw. umgekehrt, zur Einstellung einer vergleichbaren Eigenviskosität in Anwesenheit der erfindungswesentlichen Hilfsmittel c1) weit geringere Konzentrationen an Emulgatoren b) erforderlich sind.

Gegenstand der Erfindung ist demzufolge eine Verdickungsmittel-Zubereitung zur Verdickung wäßriger Systeme, bestehend aus einem Gemisch aus
a) einem Urethangruppen aufweisenden, in Wasser löslichen oder dispergierbaren Verdickungsmittel,
b) einem nicht-ionischen Emulgator in einer Menge von 0,5 bis 80Gew.-%, bezogen auf Gesamtmenge und
c) mindestens einem weiteren Zusatzmittel,
wobei die Zubereitung gegebenenfalls in Form einer wäßrigen Lösung oder Dispersion vorliegt
dadurch gekennzeichnet, daß die Komponente c) aus
c1) mindestens einer Verbindung der Formel 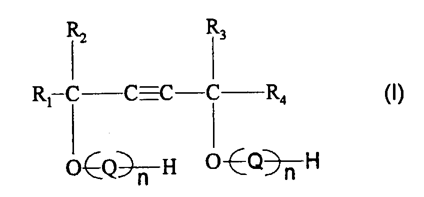 in einer Menge von 0,5 bis 40 Gew.-% bezogen auf Gesamtgemisch,
gegebenenfalls neben weiteren Hilfs- und Zusatzmitteln c2) besteht, wobei in dieser Formel
- R₁ und R₃: für gleiche oder verschiedene Kohlenwasserstoffreste und
- R₂ und R₄: für Wasserstoff oder gleiche oder verschiedene Kohlenwasserstoffreste stehen,
- Q: für Alkylenoxideinheiten steht, wie sie bei der Alkoxylierung von Alkoholen mit Alkylenoxiden mit 2 bis 4 Kohlenstoffatomen erhalten werden, und
- n: für Zahlen von 0 bis 120 steht,
mit der Maßgabe, daß die Gesamtmenge von b) und c1) maximal 90 Gew.-% bezogen auf Gesamtgewicht ist.

Gegenstand der Erfindung ist auch die Verwendung dieser Verdickungsmittel-Zubereitung in wäßrigen Systemen, ausgewählt aus der Gruppe bestehend aus wäßrigen Kraftfahrzeug- und Industrielacken, Putz- und Anstrichfarben, Druck- und Textilfarben, Pigmentdruckpasten, wäßrigen pharmazeutischen, kosmetischen Formulierungen, Pflanzenschutzformulierungen, Füllstoff- und Pigmentdispersionen, Zubereitungen von Waschmitteln, Klebstoffen, Wachsen und Polituren sowie für die Erdölförderung.

Die Komponente a) der erfindungsgemäßen Zubereitungen besteht aus Polyurethanverdickungsmitteln der an sich bekannten Art mit dem obengenannten Mindestgehalt an hydrophilen bzw. hydrophoben Segmenten und Urethangruppen.

Bei der Komponente b) handelt es sich vorzugsweise um mindestens eine Verbindung der Formel

R-[X-(Q')ₓ-H]_{y} (II)

in welcher
- R: für einen gegebenenfalls inerte Substituenten aufweisenden Kohlenwasserstoffrest, insbesondere aliphatischen, aromatischen, araliphatischen oder alkaromatischen Kohlenwasserstoffrest mit 6 bis 50 Kohlenstoffatomen, vorzugsweise für einen, gegebenenfalls mehrere aromatische Ringe umfassenden und/oder inerte Substituenten aufweisenden aromatischen oder alkaromatischen Kohlenwasserstoffrest mit 6 bis 40 Kohlenstoffatomen steht,
- X: für Sauerstoff oder einen Rest der Formel 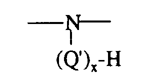 steht,
- Q': für Alkylenoxideinheiten steht, wie sie bei der Alkoxylierung von Alkoholen oder sonstigen Startermolekülen mit C₂-C₄-Alkylenoxiden entstehen, wobei Q' vorzugsweise für Ethylenoxid- und/oder Propylenoxid-Einheiten steht, mit der Maßgabe, daß mindestens 70 Mol-% dieser Einheiten Ethylenoxideinheiten darstellen,
- x: für eine Zahl von 1 bis 300, vorzugsweise 2 bis 200 und besonders bevorzugt 5 bis 100 steht und
- y: für eine Zahl von 1 bis 20, vorzugsweise 1 bis 10 und besonders bevorzugt 1 bis 4 steht.

Es handelt sich bei den Komponenten b) um an sich bekannte Alkoxylierungsprodukte von geeigneten Startermolekülen, wobei als Alkylenoxide insbesondere Ethylenoxid, Propylenoxid oder die isomeren Butylenoxide in Betracht kommen. Vorzugsweise handelt es sich bei den Alkylenoxiden jedoch um Ethylenoxid oder um Gemische von Ethylenoxid mit Propylenoxid mit einem Gehalt an Ethylenoxid von mindestens 70 Mol-%. Grundsätzlich möglich ist die Verwendung unterschiedlicher Alkylenoxide nacheinander, so daß unterschiedliche Polyetherblöcke entstehen.

Geeignete Startermoleküle sind insbesondere der obengemachten Definiton von R, X und y entsprechende mono- oder polyfunktionelle Alkohole, Phenole oder Amine wie beispielsweise n-Hexanol, n-Dodecanol, Stearylalkohol, Phenol, technisches Isononylphenol, oder Verbindungen der Formeln 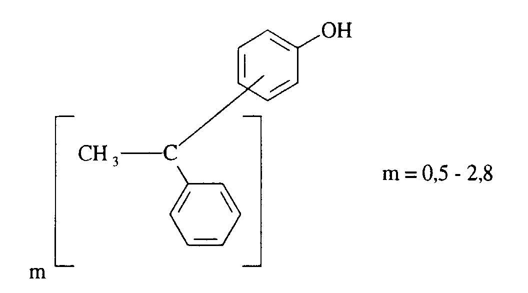 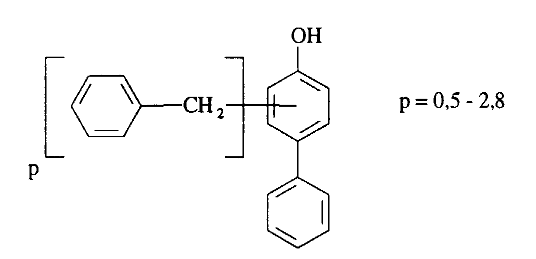 (m und p sind statistische Mittelwerte)

Auch Amine wie beispielsweise n-Hexylamin, Hexamethylendiamin, n-Dodecylamin oder Stearylamin sind im Prinzip als Startermoleküle denkbar, allerdings weniger bevorzugt.

Die erfindungswesentliche Komponente c1) besteht aus mindestens einer Verbindung der obengenannten Formel (I) mit der bereits obengenannten Bedeutung der einzelnen Variablen. Besonders bevorzugt sind solche Verbindungen der Formel (I), für welche
- R₁, R₂, R₃ und R₄: jeweils gleiche oder verschiedene Alkylreste mit 1 bis 6 Kohlenstoffatomen darstellen,
- Q: für Ethylenoxid- und gegebenenfalls Propylenoxid-Einheiten steht, mit der Maßgabe, daß mindestens 70 Mol-%, vorzugsweise 100 Mol-% der Alkylenoxide aus Ethylenoxid bestehen, und
- n: für 0 bis 20 steht.

Die Herstellung dieser Verbindungen erfolgt in an sich bekannter Weise durch Umsetzung von Acetylen mit Aldehyden bzw. Ketonen

R₁-CO-R₂ bzw. R₃-CO-R₄

und gegebenenfalls anschließende Alkoxylierung der resultierenden Diole entsprechend den gemachten Ausführungen. Besonders gut als Komponente c1) geeignet ist gegebenenfalls mit 1 bis 20 Mol Ethylen- und/oder Propylenoxid alkoxyliertes 2,4,7,9-Tetramethyl-5-decin-4,7-diol.

Weitere, gegebenenfalls mitverwendete Hilfsmittel c2) sind beispielsweise mehrwertige Alkohole wie beispielsweise Ethylenglykol, die u.a. zur Formulierung der Einzelkomponenten dienen können.

In den erfindungsgemäßen Verdickungsmittel-Zubereitungen liegt die Komponente b) in einer Menge von 0,5 bis 80, vorzugsweise 5 bis 60 und besonders bevorzugt 10 bis 50 Gew.-%, bezogen auf Gesamtgemisch, die Komponente c1) in einer Menge von 0,5 bis 40, vorzugsweise 1 bis 30 und besonders bevorzugt 1 bis 15 Gew.-%, bezogen auf Gesamtgemisch vor, wobei die Gesamtmenge der Komponenten b) und c1) bei maximal 90, vorzugsweise maximal 70 Gew.-%, bezogen auf Gesamtgemisch, beträgt. Unter "Gesamtgemisch" ist hierbei die Gesamtheit der wasserfreien Einzelkomponenten a), b) und c1) zu verstehen.

Neben diesen erfindungswesentlichen Einzelkomponenten können, wie bereits ausgeführt, noch weitere Hilfsmittel c2) vorliegen. Der Gewichtsanteil dieser Hilfsmittel liegt jedoch bei maximal 30 Gew.-%, bezogen auf das Gewicht des oben definierten "Gesamtgemischs".

Die Herstellung der erfindungsgemäßen Zubereitungen kann in an sich bekannter Weise erfolgen. So können beispielsweise die Komponenten b) und c1) nacheinander unter Rühren und gegebenenfalls Erwärmen zu dem gegebenfalls in Wasser gelösten Polyurethanverdicker a) zugegeben werden; ebenfalls möglich ist die Herstellung einer Primärmischung aus den Komponenten b) und c1), die anschließend zum gegebenenfalls in Wasser gelösten Polyurethanverdicker a) zugegeben wird. Hierbei ist jedoch auf die Homogenität der Gemische aus b) und c1) zu achten, da diese Komponenten in der Regel nicht unbegrenzt mischbar sind. In diesem Zusammenhang kommt beispielsweise die Mitverwendung von üblichen Lösungs- bzw. Verdünnungsmitteln als Komponente c2) zwecks Verbesserung der Mischbarkeit der Einzelkomponenten in Betracht.

Eine weitere Variante der Herstellung der erfindungsgemäßen Zubereitungen besteht in der Zugabe der Komponenten b) und c1), sowie von Wasser zum Polyurethanverdicker a) unmittelbar nach dessen Herstellung. Diese Methode ist besonders bevorzugt, weil sie wirtschaftliche Vorteile gegenüber den vorstehend genannten Methoden bietet.

Die gebrauchsfertigen erfindungsgemäßen Zubereitungen stellen in der Regel wäßrige Lösungen oder Dispersionen mit einem Feststoffgehalt von 10 bis 80, vorzugsweise 30 bis 60 und besonders bevorzugt 40 bis 50 Gew.-% dar, wobei unter "Feststoff" das oben definierte "Gesamtgemisch" zuzüglich gegebenenfalls vorliegenden weiteren Komponenten c2) zu verstehen ist.

Die Beurteilung der Eigenviskosität der erfindungsgemäßen Zubereitungen kann nach bekannten Methoden erfolgen, wie z.B. im Haake-Rotationsviskosimeter RV 12 oder im Brookfield-Viskosimeter. Die Viskosität kann in breiten Grenzen variieren. Vorzugsweise besitzen sie aber Fließeigenschaften, die eine problemlose Handhabung durch Gießen, Pumpen usw. ermöglichen. Sie liegt, gemessen bei 10,3 s⁻¹ und 23°C, bei 100 bis 60.000 mPa.s, bevorzugt bei 100 bis 20.000 mPa.s, besonders bevorzugt bei 100 bis 10.000 mPa.s.

Die erfindungsgemäßen Zubereitungen können aufgrund ihrer relativ niedrigen Eigenviskosität auch in ihrer konzentrierten Form der erfindungsgemäßen Verwendung zugeführt werden. Besonders bemerkenswert in diesem Zusammenhang ist die Beobachtung, daß die Verdickerwirkung in den erfindungsgemäßen Zubereitungen trotz der vergleichweise deutlich erniedrigten Eigenviskosität der erfindungsgemäßen Verdickungsmittel nicht vermindert wird.

Ein weiterer Vorteil der erfindungsgemäßen Zubereitungen liegt in ihrer Verträglichkeit mit den zu verdickenden wäßrigen Systemen, z.B. Dispersionsfarben, was eine leichte Einarbeitbarkeit der Verdickungsmittel ermöglicht, wobei gleichzeitig die sogenannte Reifezeit der erhaltenen verdickten Zubereitungen, d.h. die Zeit bis zum Erreichen der maximal möglichen Viskosität, in der Regel wesentlich verkürzt wird.

Die erfindungsgemäßen Zubereitungen eignen sich zur Verdickung von wäßrigen bzw. überwiegend wäßrigen Systemen wie Farben, Druck- und Pigmentpasten, Füllstoff- und Pigmentdispersionen, Textil-, Leder- und Papierhilfsmittel, Zubereitungen für die Erdölbeförderung, Zubereitungen von Waschmitteln, Klebstoffen, Wachsen, für Polituren, Formulierungen für pharmazeutische und veterinäre Zwecke, Pflanzenschutzzubereitungen, kosmetische Artikel usw.. Auch das Wasser selbst kann mit den erfindungsgemäßen Polyurethanverdickern angedickt werden, um dann gegebenenfalls mit weiteren Zusätzen versetzt zu werden oder selbst zu wäßrigen Zubereitungen zugesetzt werden.

Die erfindungsgemäßen Verdickungsmittel-Zubereitungen eignen sich nicht nur zur Verdickung von rein wäßrigen Systemen sondern auch von solchen Systemen, die anteilmäßig organische Lösungsmittel oder andere flüchtige Zusätze wie beispielsweise mehrwertige Alkohole enthalten. Selbstverständlich können die zu verdickenden wäßrigen Systeme die in solchen Systemen üblichen Hilfs- und Zusatzmittel wie Entschäumer, Fließ- und Verlaufhilfsmittel, Füllstoffe, Pigmente u.dgl. enthalten.

Beispiele für wäßrige Systeme, die erfindungsgemäß verdickt werden können sind wäßrige Polyacrylatdispersionen, wäßrige Dispersionen von Mischpolymerisaten olefinisch ungesättigter Monomerer, wäßrige Polyvinylacetatdispersionen, wäßrige Polyurethandispersionen, wäßrige Polyesterdispersionen und insbesondere gebrauchsfertige Zubereitungen der oben bereits angesprochenen Art auf Basis derartiger Dispersionen.

Im Falle der Verwendung der erfindungsgemäßen Zubereitungen zur Verdickung von Dispersionsfarben führt dies oftmals zu einem verbesserten Verlauf dieser Systeme und zu einer verbesserten Oberflächenbeschaffenheit der aus derartigen Dispersionsfarben hergestellten Filme. Ein weiterer Vorteil der erfindungsgemäßen Zubereitungen liegt in dem Umstand begründet, daß ihr Einsatz in pigmentierten bzw. Füllstoffe enthaltenden Dispersionsfarben oftmals zu einer verbesserten Benetzbarkeit dieser Festkörper führt, wodurch der Dispergierprozeß, d.h. die Herstellung der gebrauchsfertigen Dispersionsfarben erleichtert wird. Lackfilme, die unter Verwendung von erfindungsgemäß verdickten Dispersionsfarben hergestellt werden, zeichnen sich im übrigen oftmals durch einen verbesserten Glanz aus.

Die nachstehenden Beispiele dienen der weiteren Erläuterung der Erfindung.

### Beispiele 1 bis 5

### Herstellung eines Polyurethanverdickers a):

5680 Gew.-Teile linearer Polyethylenglykolether (Molekulargewicht 6000) werden in einer Rührapparatur mit 1250 ml Benzol und mit 23 ml 1 n H₂SO₄ versetzt und 3 Stunden auf 105°C erhitzt. Während dieser Zeit, in der das Benzol im Kreislauf geführt wird, werden 45 ml Wasser abgeschieden. Dann wurde das Benzol, zuletzt im Vakuum von 14 mm Hg, in 1 Stunde und 45 Minuten abdestilliert. Bei 75°C werden dem Polyethylenglykolether 0,336 Gew.-Teile Eisenacetylacetonat hinzugefügt und während 1 Stunde bei gleicher Temperatur gelöst. Dem so vorbehandelten Polyethylenglykolether werden bei 75°C 98 Gew.-Teile Toluylen-2,4- und Toluylen-2,6-diisocyanat (Mischungsverhältnis 65:35) sowie 235 Gew.-Teile Stearylisocyanat hinzugefügt. Nach Einmischen der Isocyanate wird eine geringfügige exotherme Reaktion beobachtet. Weiteres einstündiges Rühren bei 100°C unter Stickstoff als Schutzgas führt zum Reaktionsende. Das Reaktionsprodukt ist nach dem Abkühlen ein festes, leicht zerbrechliches Wachs.

Zu 22 g des so hergestellten Polyurethanverdickers a) wurde als Komponente b) verschiedene Mengen eines nichtionischen Tensids der Formel 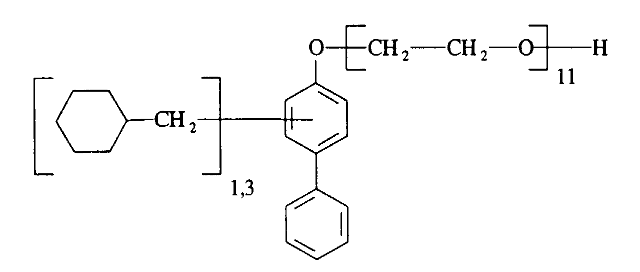 sowie als Komponente c1) verschiedene Mengen 2,4,7,9-Tetramethyl-5-decin-4,7-diol, sowie Wasser (auf 100 g) zugegeben. Die Gemische wurden 30 Minuten bei 60°C gerührt (500 U/Min.), anschließend 8 Stunden bei 50°C und dann 8 Stunden bei Raumtemperatur gelagert. Die Viskosität der so erhaltenen Lösungen wurden im Haake-Viskosimeter RV 12, Meßkörper SV DIN, bei 23°C und 10,3 s⁻¹ gemessen und sind in Tabelle 1 aufgeführt.

**Tabelle 1**

| Zusammensetzung der Verdickungsmittel-Zubereitung (Gew.-%, Rest Wasser) | | | | |
|---|---|---|---|---|
| Beispiel Nr. | Verdicker a) | Komponente b) | Komponente c1) | Viskosität (mPa.s/ 23°C) |
| 1 | 25 | 25 | 0,5 | 24500 |
| 2 | 25 | 25 | 1,0 | 16300 |
| 3 | 25 | 25 | 2,0 | 12700 |
| 4 | 25 | 25 | 3,5 | 6300 |
| 5 | 25 | 21,5 | 3,5 | 6500 |

### Vergleichsbeispiele 1 bis 3

Es wurde wie in Beispiel 1 bis 5 gearbeitet, jedoch wurden die Komponenten b) und c1) nicht oder nur einzeln zugegeben. Die Ergebnisse sind in Tabelle 2 aufgeführt.

**Tabelle 2**

| Zusammensetzung der Verdickungsmittel-Zubereitung (Gew.-%, Rest Wasser) | | | | |
|---|---|---|---|---|
| Vergleichsbeispiel Nr. | Verdicker a) | Komponente b) | Komponente c1) | Viskosität (mPa.s/ 23°C) |
| 1 | 25 | - | - | zu hoch²⁾ (nicht meßbar) |
| 2 | 25 | 25 | - | 29500 |
| 3 | 25 | - | 1 % ¹⁾ | zu hoch²⁾ (nicht meßbar) |
| 3a | 25 | - | 5% ¹⁾ | |

| | | | | |
|---|---|---|---|---|
| 1) nicht vollständig löslich | | | | |
| 2) >60000 mPa.s | | | | |

### Beispiele 6 bis 9

Es wurde verfahren wie in Beispielen 1 bis 5 beschrieben, jedoch wurde als Verdicker a) eine Verbindung gemäß US-Patentvorschrift 4 079 028 Beispiel 79, eingesetzt. Die Zusammensetzung und die Viskositäten der erhaltenen Lösungen sind in Tabelle 3 aufgeführt.

**Tabelle 3**

| Zusammensetzung der Verdickungsmittel-Zubereitung (Gew.-%, Rest Wasser) | | | | |
|---|---|---|---|---|
| Beispiel Nr. | Verdicker a) | Komponente b) | Komponente c1) | Viskosität (mPa.s/ 23°C) |
| 6 | 25 | 15 | 1 | 15000 |
| 7 | 25 | 15 | 2 | 7900 |
| 8 | 25 | 15 | 3 | 5400 |
| 9 | 25 | 15 | 5 | 4100 |

### Vergleichsbeispiele 4 und 5

Es wurde verfahren wie in Beispielen 6 bis 8 beschrieben, jedoch ohne die erfindungsgemäße Kombination der Komponenten b) und c1). Die Ergebnisse gehen aus Tabelle 4 hervor.

**Tabelle 4**

| Zusammensetzung der Verdickungsmittel-Zubereitung (Gew.-%, Rest Wasser) | | | | |
|---|---|---|---|---|
| Vergleichsbeispiel Nr. | Verdicker a) | Komponente b) | Komponente c1) | Viskosität (mPa.s/ 23°C) |
| 4 | 25 | - | - | zu hoch ¹⁾ (nicht meßbar) |
| 5 | 25 | 15 | - | zu hoch (nicht meßbar) |

| | | | | |
|---|---|---|---|---|
| 1) >60000 mPa.s | | | | |

### Beispiele 10 bis 13

Die nachfolgenden Beispiele zeigen, daß die verdickende Wirkung der Komponente a) durch die viskositätserniedrigenden Zusätze b) und c1) nicht negativ beeinflußt wird.

### Messung der Verdickerwirkung

Zu jeweils 98 g einer handelsüblichen Polyacrylatdispersion (®Dilexo RA3 der Firma Condea, 2 000 Hamburg, werden in fünf Parallelversuchen jeweils 2 g einer wäsßrigen Lösung einer Verdicker-Zubereitung zugegeben. Die Konzentration der Lösungen liegt jeweils bei 2,5 Gew.-%, bezogen auf den Polyurethanverdicker a). Die so hergestellten Gemische werden 5 Minuten bei 2 000 U/Min. gerührt. Die so erhaltenen homogenen Dispersionen werden 24 h bei 23°C gelagert. Anschließend wird wie oben beschrieben die Viskosität gemessen. Die Ergebnisse sind in Tabelle 5 aufgeführt.

**Tabelle 5**

| Beispiel Nr. | Verdickungsmittel-Zubereitung aus Beispiel Nr. | Viskosität (mPa.s) (23°C) |
|---|---|---|
| 9 | 6 | 13000 |
| 10 | 7 | 13100 |
| 11 | 8 | 13200 |
| 12 | 9 | 13100 |
| 13 | Vergleichsbeispiel Nr. 5 | 13000 |

### Beispiele 14 bis 22

Es wurde gearbeitet wie in Beispiel 1 bis 5 beschrieben, jedoch wurde als Verdicker a) eine Verbindung analog US-Patentschrift 4 079 028, Beispiel 79 genommen, jedoch mit Hexamethylendiisocyanat anstelle von Toluylendiisocyanat. Die Ergebnisse sind in Tabelle 6 zusammengestellt. In Tabelle 6 sind auch die gemäß Beispielen 10 bis 13 gemessenen Verdickerwirkungen der erfindungsgemäßen Zubereitungen aufgeführt, die zeigen, daß deren Einsatz keinen negativen Einfluß hat.

**Tabelle 6**

| Zusammensetzung der Verdickungsmittel-Zubereitungen (Gew.-%, Rest Wasser) | | | | | |
|---|---|---|---|---|---|
| Beispiel Nr. | Verdicker a) | Komponente b) | Komponente c1) | Viskosität mPa.s | Verdickerwirkung mPa.s/23°C |
| 14 | 25 | 15 | 1 | 47500 | 13100 |
| 15 | 25 | 15 | 2 | 23300 | 13000 |
| 16 | 25 | 15 | 3 | 16000 | 13200 |
| 17 | 25 | 15 | 5 | 12000 | 13200 |
| 18 | 25 | 20 | 3 | 13200 | 13300 |
| 19 | 25 | 25 | 5 | 9600 | 13100 |
| 20 | 22 | 22 | 3,5 | 6800 | 13300 |
| 21 | 22 | 18,5 | 3,5 | 7540 | 13000 |
| 22 | 18,5 | 22 | 3,5 | 3860 | 12800 |

### Vergleichsbeispiel 6 bis 8

Es wurde gearbeitet wie in Beispielen 14 bis 22 beschrieben, jedoch ohne die erfindungsgemäßen Kombinationen. Die Ergebnisse sind in Tabelle 7 zusammengestellt.

**Tabelle 7**

| Zusammensetzung der Verdickungsmittel-Zubereitung (Gew.-%, Rest Wasser) | | | | | |
|---|---|---|---|---|---|
| Vergleichsbeispiel Nr. | Verdicker a) | Komponente b) | Komponente c1) | Viskosität (mPa.s/23°C) | Verdickerwirkung mPa.s |
| 6 | 22 | 22 | - | 40500 | 13200 |
| 7 | 22 | 22 | Ethylenglykol 3,5 | 20500 | 13300 |
| 8 | 22 | 22 | Butyldiglykol 3,5 | 12800 | 13000 |

### Beispiele 23 bis 29

Es wurde gearbeitet wie in Beispiel 20, jedoch wurden anstelle des Emulgators b) aus Beispiel 1 andere Emulgatoren b) eingesetzt. Die Viskositäten und die Verdickerwirkungen sind in Tabelle 8 aufgeführt.

**Tabelle 8**

| Beispiel Nr. | Komponente b) | Viskosität (mPa.s/23°C) | Verdickerwirkung (mPa.s/23°C) |
|---|---|---|---|
| 23 | Oleylalkohol/20 EO | 23700 | 13400 |
| 24 | Stearylalkohol/30 EO | 57900 | 13000 |
| 25 | Stearylalkohol/10 EO | >60000 | 13700 |
| 26 | Nonylphenol/30 EO | 10350 | 13150 |
| 27 | Nonylphenol/10 EO | 7000 | 13550 |
| 28 | Emulgator WN ¹⁾ | 7900 | 13200 |
| 29 | ^{®Borchigen} 2) | 7200 | 13300 |

| | | | |
|---|---|---|---|
| 1) nichtionisches Tensid, Hersteller: Bayer AG, Leverkusen | | | |
| 2) nichtionisches Tensid (50 %ig in Wasser), Hersteller: Gebr. Borchers AG, Goslar | | | |

### Vergleichsbeispiele 9 bis 15

Es wurde gearbeitet wie in Beispielen 23 bis 29 beschrieben, jedoch ohne die Zugabe der Komponente c1).

| Vergleichsbeispiel Nr. | Beispiel Nr. | Viskosität (mPa.s) | Verdickerwirkung (mPa.s) |
|---|---|---|---|
| 9 | 23 | >60000 | 13400 |
| 10 | 24 | >60000 | 13650 |
| 11 | 25 | >60000 | 13680 |
| 12 | 26 | >60000 | 13650 |
| 13 | 27 | 44200 | 13330 |
| 14 | 28 | 46300 | 13000 |
| 15 | 29 | 41050 | 13580 |

### Beispiele 30 bis 33

Es wurde wie in Beispiel 20 beschrieben gearbeitet, jedoch wurde als Komponente c1) mit verschiedenen Mengen Ethylenoxid alkoxyliertes 2,4,7,9-Tetramethyl-5-decin-4,7-diol eingesetzt. Viskositäten der erfindungsgemäßen Verdicker-Zubereitungen sind in Tabelle 9 aufgeführt.

**Tabelle 9**

| Beispiel Nr. | Gew.-% Ethyloxid in Komponente B | Viskosität mPa.s | Verdickerwirkung mPa.s |
|---|---|---|---|
| 30 | 20 | 7900 | 13300 |
| 31 | 40 | 11200 | 13650 |
| 32 | 65 | 15080 | 13600 |
| 33 | 85 | 20500 | 13650 |

### Beispiele 34 bis 38

Es wurde wie in Beispiel 20 beschrieben gearbeitet, jedoch wurde anstelle der Komponente c1) die gleiche, jedoch mit Lösungsmitteln abgemischte Verbindung eingesetzt. Die Ergebnisse sind in Tabelle 10 aufgeführt.

**Tabelle 10**

| Beispiel Nr. | Gew.-% Lösungsmittel in Komponente c1) | Viskosität mPa.s/23°C | Verdickerwirkung mPa.s/23°C |
|---|---|---|---|
| 34 | 50 % Ethylenglykol | 11750 | 13300 |
| 34a | 25 % Ethylenglykol | 9450 | 13500 |
| 35 | 50 % Propylenglykol | 12980 | 13600 |
| 35a | 25 % Propylenglykol | 9800 | 13500 |
| 36 | 50 % 2-Ethylhexanol | 7540 | 13300 |
| 37 | 15 % Tetraethylenglykol | 8590 | 13600 |
| 38 | 15 % Polyethylenglykol MG 400 | 8950 | 13600 |

### Beispiel 39

Zu einer Glanzdispersion auf Acrylatbasis folgender Zusammensetzung

| | | |
|---|---|---|
| AMP 90¹⁾ | 2,5 g | 2,5 g |
| Borchigen ND²⁾, 25%ig in Wasser | 13,6 g | 13,6 g |
| Neocryl AP 2860³⁾ | 3,2 g | 3,2 g |
| Verdickungsmittel-Zubereitung aus Vergleichsbeispiel 2 | 20,0 g | - |
| erfindungsgemäße Zubereitung aus Beispiel 5 | - | 27,7 g |
| TiO₂-RHD-2 | 225,0 g | 225,0 g |
| Methoxybutanol | 17,0 g | 17,0 g |
| Propylenglykol | 17,0 g | 17,0 g |
| Butyldiglykol | 17,0 g | 17,0 g |
| Wasser | 44,7 g | 42,0 g |
| Neocryl XK 62⁴⁾ | 540,0 g | 540,0 g |
| Wasser | 100,0 g | 100,0 g |

| | | |
|---|---|---|
| 1) (2-Amino-2-methylpropanol-1, 90-%ig in Wasser), Angus Chemie GmbH, Essen | | |
| 2) Netzmittel, Gebr. Borchers AG, Goslar | | |
| 3) Entschäumer, JCJ Resins, Runcorn, England | | |
| 4) anionische Dispersion auf Basis Acrylat/Styrol, JCJ Resins | | |

wurden 0,5 Gew.-% mit 1:9 mit Wasser verdünnter Pigmentpaste Colanylblau A2 R100 (Hoechst AG) zugegeben. Die Farbe wurde auf Karton mit dem Pinsel appliziert und nach Abtrocknen wurde die Farbausbeute visuell gemäß einer von 1 (beste Probe) bis 5 reichenden Skala visuell beurteilt.

Beurteilung der mit erfindungsgemäßem Verdicker hergestellten Farben: 1

Ohne Komponente c1): 3

### Beispiele 40 bis 42 und Vergleichsbeispiele 16 bis 18

Es wurde gearbeitet wie in Beispiel 39 beschrieben, jedoch wurden nach der gleichen visuellen Skala der Verlauf, die Entlüftungs- und die Oberflächenbeschaffenheit des entstandenen Aufstriches beurteilt. Die Ergebnisse sind in Tabelle 11 aufgeführt:

**Tabelle 11**

| | | | Eigenschaft | | |
|---|---|---|---|---|---|
| Beispiel Nr. | Vergleichsbeispiel Nr. | Verdickungsmittel-Zubereitung aus | Verlauf | Entlüftung | Oberflächenbeschaffenheit |
| 40 | | Beispiel 5 | 1 | | |
| | 16 | Vergleichsbeispiel 2 | 2 | | |
| 41 | | Beispiel 5 | | 1 | |
| | 17 | Vergleichsbeispiel 2 | | 2 | |
| 42 | | Beispiel 5 | | | 1 |
| | 18 | Vergleichsbeispiel 2 | | | 2 |

### Beispiel 43 und Vergleichsbeispiel 19

Nachfolgendes Beispiel zeigt, daß die erfindungsgemäßen Verdickungsmittel-Zubereitungen eine deutliche Ersparnis in der Reifezeit der Farbe und im Glanz der Aufstriche ermöglichen. Es wurden Glanzdispersionen wie in Beispiel 39 beschrieben hergestellt und ihre Viskosität in Haake-Viskosimeter RV 12, Meßkörper SV bei 23°C gemessen. Die erhaltenen Viskositäten gehen aus Tabelle 12 hervor.

**Tabelle 12**

| Beispiel Nr. | Vergleichsbeispiel Nr. | Verdicker aus | Viskosität bei x U/Min. (Pa.s) | | | | | | | nach Std. | Glanz nach Gardner (60°C) |
|---|---|---|---|---|---|---|---|---|---|---|---|
| | | | x=1 | 2 | 4 | 8 | 16 | 32 | 64 | | |
| 43 | | Beispiel 5 | 25 | 22 | 19 | 15 | 13 | 10 | 8 | 2 | 85,6 |
| | 19 | Vergleichsbeispiel 2 | 25 | 22 | 19 | 15 | 13 | 10 | 8 | 24 | 81,1 |

### Beispiele 44 und 45 und Vergleichsbeispiele 20 bis 25

Es wurde gearbeitet wie in Beispiel 5 bzw. Vergleichsbeispielen 2 bzw. 3 beschrieben, jedoch wurden handelsübliche Polyurethanverdicker eingesetzt. Die Ergebnisse sind in Tabelle 13 aufgeführt.

**Tabelle 13**

| | | | Zusammensetzung (%, Rest Wasser) | | | | |
|---|---|---|---|---|---|---|---|
| Bsp. Nr. | Vergleichsbeispiel Nr. | Verdicker ¹⁾ | Verdicker | Komponente A | Komponente B | Viskosität (mPa.s) | Verdickerwirkung (mPa-s) |
| | 20 | Coatex BR 900 | 25 | - | - | zu hoch ²⁾ | - |
| | 21 | Coatex BR 900 | 25 | 25 | - | 8.600 | 2.900 |
| | 22 | Coatex BR 900 | 25 | - | 5 | zu hoch ²⁾ | - |
| 44 | | Coatex BR 900 | 25 | 21,5 | 3,5 | 2.600 | 2.900 |
| | 23 | Coatex BR 910 | 25 | - | - | zu hoch ²⁾ | - |
| | 24 | Coatex BR 910 | 25 | 25 | - | 5.300 | 2.800 |
| | 25 | Coatex BR 910 | 25 | - | 5 | zu hoch ²⁾ | - |
| 45 | | Coatex BR 910 | 25 | 21,5 | 3,5 | 1.600 | 2.800 |

| | | | | | | | |
|---|---|---|---|---|---|---|---|
| 1) Hersteller: Coatex S.A., Frankreich | | | | | | | |
| 2) > 60 000 mPa.s | | | | | | | |

## Patentansprüche

1. Verdickungsmittel-Zubereitung zur Verdickung wäßriger Systeme, bestehend aus einem Gemisch aus
a) einem Urethangruppen aufweisenden, in Wasser löslichen oder dispergierbaren Verdickungsmittel,
b) einem nicht-ionischen Emulgator in einer Menge von 0,5 bis 80 Gew.-% bezogen auf Gesamtgewicht und
c) mindestens einem weiteren Zusatzmittel,
wobei die Zubereitung gegebenenfalls in Form einer wäßrigen Lösung oder Dispersion vorliegt,
dadurch gekennzeichnet, daß die Komponente c) aus
c1) mindestens einer Verbindung der Formel 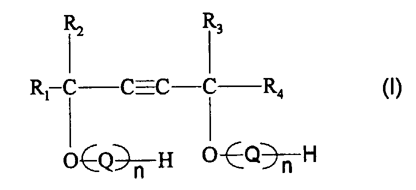 in einer Menge von 0,5 bis 40 Gew.-% bezogen auf Gesamtgemisch
gegebenenfalls neben weiteren Hilfs- und Zusatzmitteln c2) besteht, wobei in dieser Formel
R₁ und R₃ für gleiche oder verschiedene Kohlenwasserstoffreste und
R₂ und R₄ für Wasserstoff oder gleiche oder verschiedene Kohlenwasserstoffreste stehen,
Q für Alkylenoxideinheiten steht, wie sie bei der Alkoxylierung von Alkoholen mit Alkylenoxiden mit 2 bis 4 Kohlenstoffatomen erhalten werden, und
n für Zahlen von 0 bis 120 steht,
mit der Maßgabe, daß die Gesamtmenge von b) und c₁) maximal 90 Gew.-% bezogen auf Gesamtgewicht ist.

2. Verdickungsmittel-Zubereitung gemäß Anspruch 1, dadurch gekennzeichnet, daß die Komponente b) aus mindestens einer Verbindung der Formel
R-[X-(Q')ₓ-H]_{y} (II)
besteht, wobei in dieser Formel
R für einen gegebenenfalls inerte Substituenten aufweisenden Kohlenwasserstoffrest mit 6 bis 50 Kohlenstoffatomen steht,
X für Sauerstoff oder einen Rest der Formel 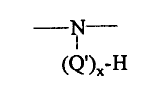 steht,
Q' für Alkylenoxideinheiten steht, wie sie bei der Alkoxylierung von Alkoholen mit Alkylenoxiden mit 2 bis 4 Kohlenstoffatomen erhalten werden, und
x für eine Zahl von 1 bis 300 und
y für eine Zahl von 1 bis 20 stehen.

3. Verdickungsmittel-Zubereitung gemäß Anspruch 1 und 2, dadurch gekennzeichnet, daß die Komponente b) aus Verbindungen der Formel (II) besteht, wobei
R für einen, gegebenenfalls mehrere aromatische Ringe umfassenden und/oder inerte Substituenten aufweisenden aromatischen oder alkaromatischen Kohlenwasserstoffrest mit insgesamt 6 bis 40 Kohlenstoffatomen,
X für Sauerstoff
Q' für Ethylenoxid- und/oder Propylenoxid-Einheiten steht, mit der Maßgabe, daß mindestens 70 Mol-% der Reste Ethylenoxideinheiten darstellen, und
x und y die in Anspruch 2 genannte Bedeutung haben.

4. Verdickungsmittel-Zubereitung gemäß Anspruch 1 bis 3, dadurch gekennzeichnet, daß die Komponente c1) aus mindestens einer Verbindung der Formel (I) besteht, wobei
R₁ und R₃ jeweils für Methylreste stehen,
R₂ und R₄ jeweils für 2-Methyl-propyl-Reste stehen,
Q für Alkylenoxideinheiten steht, die zu 70 bis 100 Mol-% Ethylenoxideinheiten und zum Rest Propenoxideinheiten darstellen,
und
n für 0 bis 20 steht.

5. 1 bis 80 gew.-%ige wäßrige Lösungen oder Dispersionen der Verdickungsmittel-Zubereitungen gemäß Anspruch 1 bis 4.

6. Verwendung der Lösungen oder Dispersionen gemäß Anspruch 5 als verdickend wirkende Zusatzmittel in wäßrigen Systemen, ausgewählt aus der Gruppe bestehend aus wäßrigen Kraftfahrzeug- und Industrielacken, Putz- und Anstrichfarben, Druck- und Textilfarben, Pigmentdruckpasten, wäßrigen pharmazeutischen, kosmetischen Formulierungen und Pflanzenschutzformulierungen, Füllstoff- und Pigmentdispersionen, Zubereitungen von Waschmitteln, Klebstoffen, Wachsen und Polituren, sowie für die Erdölförderung.

## Claims

1. Thickener preparation for thickening aqueous systems consisting of a mixture of
a) a water-soluble or water-dispersible thickener containing urethane groups,
b) a non-ionic emulsifier in a quantity of 0.5 to 80 wt.%, relative to total weight, and
c) at least one further additive,
wherein the preparation is optionally in the form of an aqueous solution or dispersion,
characterised in that component c) consists of
c1) at least one compound of the formula 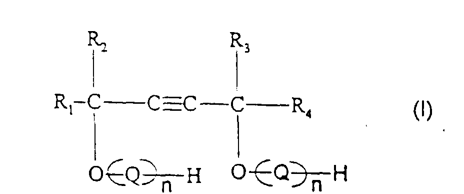 in a quantity of 0.5 to 40 wt.%, relative to the complete mixture,
optionally together with further auxiliary substances and additives c2), wherein in this formula
R₁ and R₃ denote identical or different hydrocarbon residues and
R₂ and R₄ denote hydrogen or identical or different hydrocarbon residues,
Q denotes alkylene oxide units, as are obtained from alkoxylating alcohols with alkylene oxides having 2 to 4 carbon atoms, and
n denotes numbers from 0 to 120,
with the proviso that the total quantity of b) and c1) is at most 90 wt.% relative to total weight.

2. Thickener preparation according to claim 1, characterised in that component b) consists of at least one compound of the formula
R-[X-(Q')ₓ-H]_{y} (II)
wherein in this formula
R denotes a hydrocarbon residue having 6 to 50 carbon atoms and optionally containing inert substituents,
X denotes oxygen or a residue of the formula 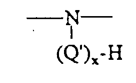
Q' denotes alkylene oxide units, as are obtained from alkoxylating alcohols with alkylene oxides having 2 to 4 carbon atoms, and
x denotes a number from 1 to 300 and
y denotes a number from 1 to 20.

3. Thickener preparation according to claims 1 and 2, characterised in that component b) consists of compounds of the formula (II), wherein
R denotes an aromatic or alkaromatic hydrocarbon residue having a total of 6 to 40 carbon atoms and optionally comprising two or more aromatic rings and/or containing inert substituents,
X denotes oxygen
Q' denotes ethylene oxide and/or propylene oxide units, with the proviso that at least 70 mol.% of the residues are ethylene oxide units, and
x and y have the meaning stated in claim 2.

4. Thickener preparation according to claims 1 to 3, characterised in that component c1) consists of at least one compound of the formula (I), wherein
R₁ and R₃ each denote methyl residues,
R₂ and R₄ each denote 2-methylpropyl residues,
Q denotes alkylene oxide units comprising 70 to 100 mol.% of ethylene oxide units with the remainder being propylene oxide units,
and
n denotes 0 to 20.

5. 1 to 80 wt.% aqueous solutions or dispersions of the thickener preparations according to claims 1 to 4.

6. Use of the solutions or dispersions according to claim 5 as thickening additives in aqueous systems, selected from the group comprising aqueous automotive and industrial lacquers, paints and plasterwork paints, printing and textile inks, pigment printing pastes, aqueous pharmaceutical, cosmetic formulations and plant protection formulations, filler and pigment dispersions, detergent, adhesive, wax and polish preparations, and for petroleum extraction.

## Revendications

1. Formulation d'épaississant pour épaissir des systèmes aqueux, constituée d'un mélange de
a) un épaississant présentant des groupes uréthane solubles ou aptes à être dispersés dans l'eau,
b) un émulsifiant non ionique en une quantité de 0,5 à 80% en poids rapportés au poids total et
c) au moins un autre additif,
la formulation étant présente, le cas échéant, sous forme d'une solution ou d'une dispersion aqueuse,
caractérisée en ce que le composant c) est constitué de
c1) au moins un composé de formule 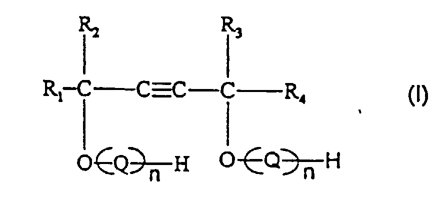 en une quantité de 0,5 à 40% en poids rapportés au mélange total,
le cas échéant, en plus d'autres adjuvants et additifs c2), formule dans laquelle
R₁ et R₃ représentent des radicaux d'hydrocarbures identiques ou différents et
R₂ et R₄ représentent un atome d'hydrogène ou des radicaux d'hydrocarbures identiques ou différents,
Q représente des unités d'oxydes d'alkylène telles qu'on les obtient lors de l'alcoxylation d'alcools avec des oxydes d'alkylène contenant de 2 à 4 atomes de carbone, et
n représente des nombres de 0 à 120,
avec cette mesure que la quantité totale de b) et de c1) s'élève au maximum à 90% en poids rapportés au poids total.

2. Formulation d'épaississant selon la revendication 1, caractérisée en ce que le composant b) est constitué au moins d'un composé de formule
R-[X-(Q')ₓ-H]_{y} (II)
dans laquelle
R représente un radical d'hydrocarbure contenant de 6 à 50 atomes de carbone, présentant, le cas échéant, des substituants inertes,
X représente un atome d'oxygène ou un radical de formule 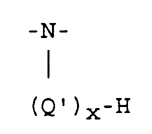
Q' représente des unités d'oxydes d'alkylène telles qu'on les obtient lors de l'alcoxylation d'alcools avec des oxydes d'alkylène contenant de 2 à 4 atomes de carbone,
x représente un nombre de 1 à 300 et
y représente un nombre de 1 à 20.

3. Formulation d'épaississant selon la revendication 1 ou 2, caractérisée en ce que le composant b) est constitué par des composés de formule (II) dans laquelle
R représente un radical d'hydrocarbure aromatique ou alkaromatique contenant au total de 6 à 40 atomes de carbone, comprenant le cas échéant plusieurs noyaux aromatiques et/ou présentant des substituants inertes,
X représente un atome d'oxygène,
Q' représente des unités d'oxyde d'éthylène et/ou d'oxyde de propylène, avec cette mesure qu'au moins 70 moles % des radicaux représentent des unités d'oxyde d'éthylène et
x et y ont la signification indiquée à la revendication 2.

4. Formulation d'épaississant selon les revendications 1 à 3, caractérisée en ce que le composant c1) est constitué d'au moins un composé de formule (I) dans laquelle
R1 et R3 représentent respectivement des radicaux méthyle,
R2 et R4 représentent respectivement des radicaux 2-méthylpropyle,
Q représente des unités d'oxydes d'alkylène qui représentent jusqu'à concurrence de 70 à 100 moles % des unités d'oxyde d'éthylène et, pour le reste, des unités d'oxyde de propylène,
et
n représente de 0 à 20.

5. Solutions ou dispersions aqueuses à concurrence de 1 à 80% en poids des formulations d'épaississants selon les revendications 1 à 4.

6. Utilisation des solutions ou des dispersions selon la revendication 5 comme additifs à activité épaississante dans des systèmes aqueux choisis parmi le groupe constitué par des laques, des vernis ou des peintures aqueux pour des véhicules automobiles et à usage industriel, des couleurs pour des crépis et pour des applications d'enduction, des couleurs pour l'imprimerie et pour les matières textiles, des pâtes pour l'impression au charbon, des formulations cosmétiques, pharmaceutiques aqueuses et des formulations pour la protection des plantes, des dispersions contenant des substances de remplissage et des pigments, des formulations de détergents, d'adhésifs, de cires et de vernis, ainsi que pour l'extraction du pétrole.
